# EUROPÄISCHE PATENTANMELDUNG

(11) **EP 4 636 668 A1**
(43) Veröffentlichungstag der Anmeldung: **22.10.2025**
(21) Anmeldenummer: 25167816.5
(22) Anmeldetag: 01.04.2025
(51) Int. Cl.: G06Q 10/0836, A47F 1/12, A47F 3/02, A47G 29/12, G07C 9/00, G07F 17/12

(54) **STÜCKGUTSCHRANK UND VERFAHREN ZUM BEREITHALTEN UND ABHOLEN VON STÜCKGÜTERN**

(30) Priorität: 18.04.2024 DE 102024110946
(71) Anmelder: Deutsche Post AG, 53113 Bonn (DE)
(72) Erfinder: BOSSEK, Martin, 50321 Brühl (DE); HORMANN, Ralf, 53229 Bonn (DE); KAMB, Dennis, 51503 Rösrath (DE)
(74) Vertreter: Cohausz & Florack

(57) **Zusammenfassung**

Beschrieben und dargestellt ist ein Stückgutschrank (1) zum Bereithalten von abzuholenden Stückgütern (21) mit einer Mehrzahl von separaten Stückgutfächern (2,30,40) zum Einlegen und Entnehmen von Stückgütern (21), mit einer Steuereinrichtung (10) zur Steuerung des Einlegens und Entnehmens von Stückgütern (21) in oder aus den Stückgutfächern (2) und mit einer Authentifizierungseinrichtung (5) zur Authentifizierung eines Abholers des Stückguts (21), wobei den Stückgutfächern (2,30,40) jeweils eine von einer Zugriff auf das zugehörige Stückgutfach (2,30,40) verhindernden Verschlussstellung in eine Zugriff auf das zughörige Stückgutfach (2,30,40) freigebende Öffnungsstellung verstellbare Verschlusseinrichtung (3) zugeordnet ist, wobei die Steuereinrichtung (10) mit wenigstens einer von einer eine Verschlusseinrichtung (3) in der Verschlussstellung verriegelnden Verriegelungsstellung in eine das Verstellen der Verschlusseinrichtung (3) in die Öffnungsstellung freigebende Freigabestellung verstellbaren Verriegelungseinrichtung (11) gekoppelt ist und wobei die Authentifizierungseinrichtung (5) zur Aktivierung der Steuereinrichtung (10) bei erfolgreicher Authentifizierung des Abholers mit der Steuereinrichtung (10) gekoppelt ist. Damit Abholer Stückgüter einfacher aus dem entsprechenden Stückgutfächern entnehmen können, ist vorgesehen, dass wenigstens einige der Stückgutfächer (2,30,40) eine innerhalb des zugehörigen Stückgutfachs (2,30,40) von einer hinteren Nichtgebrauchsstellung in wenigstens eine vordere Gebrauchsstellung verstellbare Rückwandeinheit (17,33,41) zum Verschieben eines in dem zugehörigen Stückgutfach (2,30,40) enthaltenen Stückgut (21) nach vorne in Richtung einer Öffnung (14) des Stückgutfachs (2,30,40) aufweisen.

## Beschreibung

Die Erfindung betrifft einen Stückgutschrank zum Bereithalten von abzuholenden Stückgütern mit einer Mehrzahl von separaten Stückgutfächern zum Einlegen und Entnehmen von Stückgütern, mit einer Steuereinrichtung zur Steuerung des Einlegens und Entnehmens von Stückgütern in oder aus den Stückgutfächern und mit einer Authentifizierungseinrichtung zur Authentifizierung eines Abholers des Stückguts, wobei den Stückgutfächern jeweils eine von einer Zugriff auf das zugehörige Stückgutfach verhindernden Verschlussstellung in eine Zugriff auf das zughörige Stückgutfach freigebende Öffnungsstellung verstellbare Verschlusseinrichtung zugeordnet ist, wobei die Steuereinrichtung mit wenigstens einer von einer eine Verschlusseinrichtung in der Verschlussstellung verriegelnden Verriegelungsstellung in eine das Verstellen der Verschlusseinrichtung in die Öffnungsstellung freigebende Freigabestellung verstellbaren Verriegelungseinrichtung gekoppelt ist und wobei die Authentifizierungseinrichtung zur Aktivierung der Steuereinrichtung bei erfolgreicher Authentifizierung des Abholers mit der Steuereinrichtung gekoppelt ist. Ferner betrifft die Erfindung ein Verfahren zum Abholen wenigstens eines Stückguts aus einem solchen Stückgutschrank.

Es sind bereits Stückgutschränke mit einer Reihe von Stückgutfächern bekannt, in welche einzelne Stückgüter eingelegt werden können, um zu einem späteren Zeitpunkt von einem autorisierten Abholer abgeholt zu werden. Um sicherzustellen, dass die Stückgüter nur von autorisierten Abholern abgeholt werden können, sind den Stückgutfächern Verschlusseinrichtungen, etwa in Form von Klappen oder Türen, zugeordnet, die von einer den Zugriff auf das zugehörige Stückgutfach verhindernden Verschlussstellung in eine den Zugriff auf das zughörige Stückgutfach freigebende Öffnungsstellung und zurück verstellt werden können. Der Abholer muss sich mithin zunächst an einer Authentifizierungseinrichtung authentifizieren, um ein bestimmtes Stückgutfach öffnen zu können. Bei erfolgreicher Authentifizierung eines Abholers wird eine Steuereinrichtung aktiviert, um eine Verriegelungseinrichtung anzusteuern, die mit dem Stückgutfach zusammenwirkt, aus dem das Stückgut vom Abholer entnommen werden soll. Die Verriegelungseinrichtung kann gesteuert von der Steuereinrichtung von einer Verriegelungsstellung in eine Freigabestellung verstellt werden, wobei die Verriegelungseinrichtung in der Verriegelungsstellung die Verschlusseinrichtung in der Verschlussstellung verriegelt und die Verschlusseinrichtung in der Freigabestellung zum Verstellen in die Öffnungsstellung freigibt, in der das Stückgut aus dem betreffenden Stückgutfach entnommen werden kann. Nach dem Entnehmen des Stückguts kann die Verschlusseinrichtung wieder in die Verschlussstellung verstellt und dort von der Verriegelungseinrichtung verriegelt werden. Das Einlegen von Stückgütern in die Stückgutfächer erfolgt analog, wobei vom Stückgutschrank eine Zuordnung von Stückgut und Stückgutfach vorgenommen wird, um sicherzustellen, dass das jeweilige Stückgut immer nur von einem dafür autorisierten Abholer abgeholt werden kann. Zur Authentifizierung stehen unterschiedliche, an sich bekannte Verfahren zur Auswahl. Der Abholer kann sich beispielsweise mit einer ID-Karte, einem Passwort, einem OQ-Code oder einem Barcode ausweisen. Letztere können dem Abholer beispielsweise für jedes Stückgut auf ein mobiles Endgerät gesendet werden, wenn das entsprechende Stückgut in ein Stückgutfach des Stückgutkastens eingelegt wird.

Bei den Stückgutschränken der genannten Art handelt es sich bevorzugt, aber eben nicht zwingend, um sogenannte Fachanlagen, zum Beispiel in Form von Schließ- oder Paketfachanlagen oder elektronischen Sendungszustellungs- und Abholungsanlagen oder dergleichen, in die Stückgüter, etwa in Form von Paketen, Briefe oder andere Sendungsformate von einem Lieferdienst eingelegt werden können, damit sie später von Abholern, für die die Pakete und/oder Briefe bestimmt sind, abgeholt werden können. Die Abholer können dabei Endkunden und/oder Privatpersonen sein. Der Lieferdienst legt typischerweise mehrere Stückgüter in unterschiedliche Stückgutfächer ein, wobei die Stückgüter zur Abholung durch unterschiedliche Abholer vorgesehen sein können. In Einzelfällen kann der Lieferdienst auch mehrere Stückgüter in ein Stückgutfach einlegen, wenn diese für denselben Abholer bestimmt sind.

Die Stückgutschränke der beschriebenen Art können daher an einem Ort aufgestellt sein, der öffentlich zugänglich ist und von den Abholern problemlos aufgesucht werden kann. Das Abholen von Stückgütern aus dem Stückgutschrank kann dann zu beliebigen Tageszeiten und/oder Wochentagen erfolgen.

Die Stückgüter werden in den Stückgutschränken meist zufällig in freie Stückgutfächer eingelegt. So kann es passieren, dass ein in einem oben im Stückgutschrank angeordneten Stückgutfach abgelegtes Stückgut von einem Abholer mit geringer Körpergröße oder von einem Rollstuhlfahrer abgeholt wird. Der Abholer kann dann Schwierigkeiten haben, das Paket aus dem Stückgutfach zu entnehmen. Andersherum kann es sein, dass ein sehr großer Abholer oder ein Abholer, der sich aus gesundheitlichen Gründen schlecht bücken kann, ein Stückgut zufällig aus einem unteren Stückgutfach des Stückgutschranks abholen muss. Auch in diesem Fall kann der Abholer Schwierigkeiten haben, das Stückgut aus dem Stückgutfach zu entnehmen.

Daher liegt der vorliegenden Erfindung die Aufgabe zugrunde, den Stückgutschrank und das Verfahren jeweils der eingangs genannten und zuvor näher erläuterten Art derart auszugestalten und weiterzubilden, dass wenigstens einige Abholer die für sie bestimmten Stückgüter einfacher aus dem entsprechenden Stückgutfächern entnehmen können.

Diese Aufgabe ist bei einem Stückgutschrank gemäß dem Oberbegriff von Anspruch 1 dadurch gelöst, dass wenigstens einige der Stückgutfächer eine innerhalb des zugehörigen Stückgutfachs von einer hinteren Nichtgebrauchsstellung in wenigstens eine vordere Gebrauchsstellung verstellbare Rückwandeinheit zum Verschieben eines in dem zugehörigen Stückgutfach enthaltenen Stückgut nach vorne in Richtung einer Öffnung des Stückgutfachs aufweisen.

Die genannte Aufgabe ist ferner gemäß Anspruch 9 gelöst durch ein Verfahren zum Abholen wenigstens eines Stückguts aus einem Stückgutschrank nach einem der Ansprüche 1 bis 8,
- bei dem sich ein Abholer an einer Authentifizierungseinrichtung als zum Abholen eines Stückguts aus einem Stückgutfach des Stückgutschranks berechtigt authentifiziert,
- bei dem die Steuereinrichtung nach erfolgter Authentifizierung eine Verriegelungseinrichtung von einer eine Verschlusseinrichtung in einer Verschlussstellung verriegelnden Verriegelungsstellung in eine die Verschlusseinrichtung in eine Öffnungsstellung freigebende Freigabestellung verstellt,
- bei dem nach dem Verstellen der Verschlusseinrichtung in die Öffnungsstellung vom Abholer eine Betätigungseinrichtung des Stückgutsfachs ergriffen wird,
- bei dem der Abholer mittels der Betätigungseinrichtung eine Rückwandeinheit des Stückgutfachs von einer hinteren Nichtgebrauchsstellung in wenigstens eine vordere Gebrauchsstellung verstellt und dabei das Stückgut wenigstens abschnittsweise zusammen mit der Rückwandeinheit in dem Stückgutfach nach vorne in eine vordere Position verschiebt und
- bei dem das Stückgut von dem Abholer händisch aus der vorderen Position aus dem Stückgutfach entnommen wird.

Um das Ergreifen eines Stückguts in einem Stückgutfach zu erleichtern, kann das entsprechende Stückgutfach mit einer Rückwandeinheit versehen sein, die von einer hinteren Nichtgebrauchsstellung in eine vordere Gebrauchsstellung verstellt werden kann. Durch das entsprechende Verstellen der Rückwandeinheit kann ein Stückgut, das weit hinten in dem Stückgutfach liegt, nach vorne in Richtung der Öffnung des Stückgutfachs verschoben werden, wo es einfacher ergriffen werden kann, als in der ursprünglichen hinteren Position. In der Praxis kommt es zudem oft vor, dass die Stückgüter beim unvorsichtigen Einlegen in die Stückgutfächer weiter als nötig nach hinten rutschen, so dass ohne eine verstellbare Rückwandeinheit sehr weit in das Sendungsfach hineingegriffen werden muss, um das Stückgut aus dem Stückgutfach zu entnehmen. Dies kann je nach Abholer insbesondere dann besonders schwer sein, wenn das Stückgutfach weit oben oder weit unten im Stückgutschrank angeordnet ist. Unter Verwendung der Rückwandeinheit können aber trotzdem auch Abholer von kleiner oder sehr kleiner Statur Packstücke aus einem weit oben angeordneten Stückgutfach entnehmen. Ebenso können sehr große Personen mit Hilfe der Rückwandeinheit recht problemlos Stückgüter aus weit unten angeordneten Stückgutfächern entnehmen.

Verfahrensmäßig lässt sich das bewerkstelligen, indem sich der Abholer zunächst an einer Authentifizierungseinrichtung als zum Abholen eines Stückguts aus einem Stückgutfach des Stückgutschranks berechtigt authentifiziert. Ist die Authentifizierung erfolgreich, kann eine Steuereinrichtung anschließend eine Verriegelungseinrichtung ansteuern, welche infolgedessen von einer Verriegelungsstellung in eine Freigabestellung verstellt wird. Während die Verriegelungseinrichtung in der Verriegelungsstellung eine Verschlusseinrichtung in einer Verschlussstellung verriegelt, so gibt die Verriegelungseinrichtung in der Freigabestellung die Verschlusseinrichtung frei, um aus der den Zugang zum Stückgutfach verhindernden Verschlussstellung in eine Öffnungsstellung verstellt zu werden, in der der Zugriff auf das Stückgutfach und damit auf das darin platzierte Stückgut grundsätzlich ermöglicht wird.

Zunächst wird verfahrensmäßig aber vom Abholer eine Betätigungseinrichtung des Stückgutfachs ergriffen, wenn die Verschlusseinrichtung in die Öffnungsstellung verstellt worden ist. Dieses Verstellen kann beispielsweise händisch vom Abholer selbst erfolgen oder aber die Verschlusseinrichtung ist in der Verschlussstellung derart federbelastet, dass ein Verstellen der Verriegelungseinrichtung von der Verriegelungsstellung in die Freigabestellung ein automatisches Verstellen der Verschlusseinrichtung in die Öffnungsstellung bewirkt.

Die Betätigungseinrichtung ist dabei mit der Rückwandeinheit gekoppelt. Somit kann der Abholer mittels der Betätigungseinrichtung die Rückwandeinheit von der hinteren Nichtgebrauchsstellung in die vordere Gebrauchsstellung verstellen. Dies bewirkt dann ein Verschieben des in dem Stückgutfach vorgesehenen Stückguts zusammen mit der Rückwandeinheit von hinten nach vorne in Richtung der Öffnung des Stückgutfachs. Sodann wird das Stückgut im entsprechenden Stückgutfach vom Abholer händisch ergriffen und aus dem Stückgutfach entnommen.

Abschließend kann der Abholer die Rückwandeinheit bedarfsweise mittels der Betätigungseinrichtung zurück in die hintere Nichtgebrauchsstellung zurück verstellen, wenn dies nicht zwangsweise und ohne weiteres Zutun durch den Abholer erfolgt. Unabhängig davon kann der Abholer zudem die Verschlusseinrichtung wieder in die Verschlussstellung verstellen, in der die Verriegelungseinrichtung bedarfsweise automatisch oder zwangsweise aus der Freigabestellung zurück in die Verriegelungsstellung gelangt, in der die Verschlusseinrichtung in der Verschlussstellung verriegelt wird.

Um den Stückgutschrank flexibel betreiben zu können, bietet es sich an, wenn jedes Stückgutfach mit einer zugehörigen Verschlusseinrichtung versehen ist. Zudem kann es sich anbieten, wenn jeder Verschlusseinrichtung eine Verriegelungseinrichtung zugeordnet ist. Es kann aber auch mehreren Verschlusseinrichtungen eine gemeinsame Verriegelungseinrichtung zugeordnet sein. Die gemeinsame Verriegelungseinrichtung wird dann aber vorzugsweise die separate Verriegelung und Freigabe jeder einzelnen Verschlusseinrichtung ermöglichen. Die hierfür in Frage kommenden Verriegelungseinrichtungen sind dabei beispielsweise aus Schließfachanlagen oder dergleichen bekannt.

Bei einer ersten besonders bevorzugten Ausgestaltung des Stückgutschranks ist die Rückwandeinheit über wenigstens ein Federmittel mit dem Stückgutfach gekoppelt. Diese Koppelung bewirkt, dass sich die Rückwandeinheit aus der wenigstens einen vorderen Gebrauchsstellung selbsttätig wieder in die hintere Nichtgebrauchsstellung zurück verstellen kann. Dies ist beispielsweise dann möglich, wenn der Abholer die Rückwandeinheit nicht aktiv daran hindert und/oder wenn die Rückwandeinheit nicht in der vorderen Gebrauchsstellung festgelegt ist. Die Rückwandeinheit gelangt also im ansonsten unbelasteten Zustand aus der wenigstens einen vorderen Gebrauchsstellung selbsttätig wieder in die hintere Nichtgebrauchsstellung zurück. Damit dies schonend für den Stückgutschrank erfolgt, kann ein Dämpfungselement vorgesehen sein, das für ein langsames Zurückverstellen der Rückwandeinheit sorgt. Alternativ oder zusätzlich kann auch ein elastisches Dämpfungselement aufweisender Endanschlag vorgesehen sein, der in Anlage an die Rückwandeinheit gelangt, wenn sich die Rückwandeinheit in der Nähe der hinteren Nichtgebrauchsstellung befindet.

Um das Verstellen der Rückwandeinheit von der hinteren Nichtgebrauchsstellung in die vordere Gebrauchsstellung zu vereinfachen, kann es zweckmäßig sein, wenn die Rückwandeinheit mit einer vom Abholer zu ergreifenden Betätigungseinrichtung verbunden ist. Die Verbindung kann dabei so vorgesehen sein, dass die Rückwandeinheit über die Betätigungseinrichtung von der hinteren Nichtgebrauchsstellung in die wenigstens eine vordere Gebrauchsstellung verstellbar ist. Dies kann beispielsweise dadurch bewirkt werden, dass an der Betätigungseinrichtung seitens des Abholers gezogen wird, und zwar bevorzugt in einer Richtung wenigstens im Wesentlichen parallel zu der zu bewirkenden Verstellung der Rückwandeinheit von hinten nach vorne.

Die Betätigungseinrichtung kann dabei einen Griff, eine Griffleiste, einen Knauf oder einen Ring zum Ergreifen durch den Abholer aufweisen. Zudem kann die Betätigungseinrichtung starr mit der Rückwandeinheit verbunden sein, etwa durch einen Stab oder eine Leiste. Denkbar ist aber auch eine flexible, lediglich auf Zug belastbare Verbindung, etwa umfassend ein Seil oder einen Draht. Unabhängig von der jeweiligen Ausgestaltung der Betätigungseinrichtung kann alternativ oder zusätzlich zur Rückwandeinheit die Betätigungseinrichtung in Anlage an einen ein elastisches Dämpfungselement aufweisenden Endanschlag gelangen, wenn sich die Rückwandeinheit in der Nähe der hinteren Nichtgebrauchsstellung befindet, um das Zurückverstellen der Rückwandeinheit zu dämpfen.

Um ein definiertes und einfaches Verstellen der Rückwandeinheit sicherzustellen, kann das Stückgutfach mehrere Führungsschienen aufweisen. Diese befinden sich aus Platzgründen beispielsweise an den einander gegenüberliegenden Seitenwänden des Stückgutfachs. Dann kann bedarfsweise die Rückwandeinheit über wenigstens ein Schlittenelement entlang der Führungsschienen verstellbar mit den Führungsschienen verbunden sein. Dabei wird es sich der Einfachheit halber in vielen Fällen weiter anbieten, wenn jeder Führungsschiene ein Schlitten der Rückwandeinheit zugeordnet ist. Unabhängig davon kann es zweckmäßig sein, wenn das wenigstens eine Dämpfungselement der Rückwandeinheit mit wenigstens einer Führungsschiene zusammenwirkt oder aber in die wenigstens eine Führungsschiene integriert ist.

Um die eigentliche Funktion der Stückgutfächer und damit des Stückgutschranks nicht zu beeinträchtigen, bietet es sich an, wenn die Rückwandeinheit in der Nichtgebrauchsstellung vollständig innerhalb des Stückgutfachs aufgenommen ist. Dabei ist es aus demselben Grund weiter bevorzugt, wenn die Rückwandeinheit zusammen mit dem Betätigungselement in der Nichtgebrauchsstellung vollständig innerhalb des Stückgutfachs aufgenommen ist.

Damit der Stückgutschrank möglichst einfach von den Abholern bedient werden kann, ist es zweckmäßig, wenn obere und/oder untere Stückgutfächer eine Rückwandeinheit und bedarfsweise zusätzlich eine Betätigungseinrichtung aufweisen. Das Entnehmen von Stückgütern aus solchen Stückgutfächern kann ansonsten besonders umständlich sein. Um den Stückgutschrank dennoch einfach und kostengünstig ausbilden zu können, können lediglich obere und/oder untere Stückgutfächer eine Rückwandeinheit und bedarfsweise eine Betätigungseinrichtung aufweisen.

Wenn der Stückgutschrank höhere Stückgutfächer und niedrigere Stückgutfächer aufweist, kann es sich alternativ oder zusätzlich anbieten, wenn niedrigere Stückgutfächer eine Rückwandeinheit und bedarfsweise eine Betätigungseinrichtung aufweisen. Es kann ansonsten schwierig sein, ein weit hinten in einem niedrigen Stückgutfach angeordnetes Stückgut aus dem Stückgutfach zu entnehmen. Um den Stückgutschrank dennoch nicht zu aufwendig und teuer werden zu lassen, können lediglich niedrigere Stückgutfächer eine Rückwandeinheit aufweisen, wenn dies gewünscht ist.

Bei einer ersten besonders bevorzugten Ausgestaltung des Verfahrens verstellt sich die Rückwandeinheit über ein Federmittel selbsttätig aus der wenigstens einen vorderen Gebrauchsstellung in die hintere Nichtgebrauchsstellung zurück. Dies kann beispielsweise erfolgen, wenn der Abholer die Betätigungseinrichtung loslässt, was typischerweise erfolgen wird, wenn der Abholer das abzuholende Stückgut mit der Rückwandeinheit so weit nach vorne in Richtung der Öffnung verschoben hat, dass er das Stückgut problemlos ergreifen kann. Das Zurückverstellen der Rückwandeinheit aus der vorderen Gebrauchsstellung in die hintere Nichtgebrauchsstellung kann dabei durch ein Dämpfungselement gedämpft sein, wie dies zuvor im Zusammenhang mit dem Stückgutschrank beschrieben worden ist.

Wenn die Rückwandeinheit und bedarfsweise auch die Betätigungseinrichtung in die hintere Nichtgebrauchsstellung zurück verstellt werden, werden die Rückwandeinheit und bedarfsweise auch die Betätigungseinrichtung vorzugsweise vollständig in dem Stückgutfach aufgenommen. Dann kann die Verschlusseinrichtung in die Verschlussstellung zurückgebracht werden, ohne dass dies durch die Rückwandeinheit und bedarfsweise auch die Betätigungseinrichtung behindert wird.

Das Verschieben eines Stückguts in einem Stückgutfach nach vorne lässt sich mittels der Rückwandeinheit sehr kräfteschonend bewerkstelligen, wenn die Rückwandeinheit über wenigstens ein Schlittenelement entlang von Führungsschienen des Stückgutfachs von der hinteren Nichtgebrauchsstellung in eine vordere Gebrauchsstellung und zurück verstellt wird. Dabei kann jeder Führungsschiene ein Schlitten zugeordnet sein. Zudem können das wenigstens eine Schlittenelement und/oder die Führungsschienen Rollen zum Abgleiten aneinander aufweisen.

Praktisch kann es sein, wenn sich ein Abholer an einer Authentifizierungseinrichtung als zum Abholen mehrerer Stückgüter aus mehreren Stückgutfächern des Stückgutschranks berechtigt authentifizieren kann, wobei dann die Steuerungseinrichtung nach erfolgter Authentifizierung wenigstens eine Verriegelungseinrichtung von einer mehrere Verschlusseinrichtungen in einer Verschlussstellung verriegelnden Verriegelungsstellung in eine die Verschlusseinrichtungen in eine Öffnungsstellung freigebende Freigabestellung verstellt. Nach einem Verstellen der Verschlusseinrichtungen in die Öffnungsstellung können vom Abholer nacheinander mehrere Betätigungseinrichtungen mehrerer Stückgutfächer ergriffen werden, wobei der Abholer mittels der Betätigungseinrichtungen Rückwandeinheiten der Stückgutfächer von der hinteren Nichtgebrauchsstellung in die vordere Gebrauchsstellung verstellt und dabei die Stückgüter wenigstens abschnittsweise zusammen mit den Rückwandeinheiten in den Stückgutfächern nach vorne in eine vordere Position in Richtung der Öffnungen der Stückgutfächer verschiebt. Sodann können die Stückgüter von dem Abholer händisch aus den vorderen Positionen aus den Stückgutfächern entnommen werden. Ein solches Verfahren erlaubt es also ohne erneute Authentifizierung gleich aus einer Vielzahl von Stückgutfächern Stückgüter entnehmen zu können. Dies ist insbesondere für einen Mitarbeiter eines Lieferdienstes zweckmäßig, der gleichzeitig viele von vielen unterschiedlichen Kunden in den Stückgutschrank eingelegte Stückgüter entnehmen und mitnehmen will.

Nachfolgend wird die Erfindung anhand einer lediglich Ausführungsbeispiele darstellenden Zeichnung näher erläutert. In der Zeichnung zeigt
- Fig. 1: einen ersten erfindungsgemäßen Stückgutschrank in einer Vorderansicht,
- Fig. 2A-B: ein Stückgutfach des Stückgutschranks aus Fig. 1 mit einer Verschlusseinrichtung in der Öffnungsstellung in einer perspektivischen Ansicht,
- Fig. 3A-C: das Stückgutfach aus Fig. 2 in unterschiedlichen Stellungen während des Entnehmens eines Stückguts in einer seitlichen Schnittansicht,
- Fig. 4: ein alternatives Stückgutfach in einer seitlichen Schnittansicht,
- Fig. 5: ein weiteres alternatives Stückgutfach mit einer Verschlusseinrichtung in der Öffnungsstellung in einer Draufsicht und
- Fig. 6A-B: das Stückgutfach aus Fig. 5 in unterschiedlichen Stellungen während des Entnehmens eines Stückguts in einer seitlichen Schnittansicht.

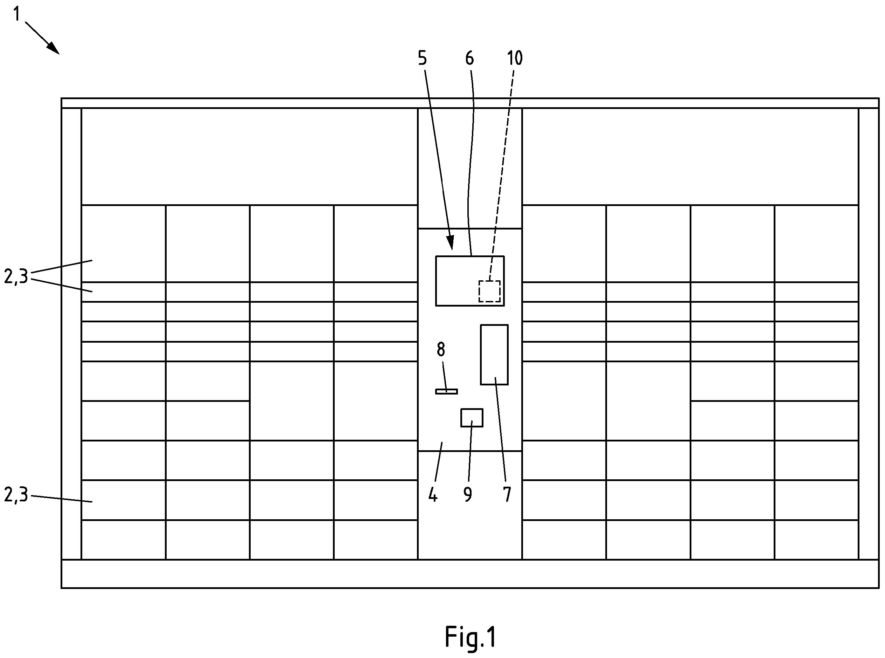

In der Fig. 1 ist ein beispielhafter Stückgutschrank 1 mit einer Vielzahl von Stückgutfächern 2 dargestellt. Die Stückgutfächer 2 weisen teilweise unterschiedliche Größen auf und sind teilweise auf unterschiedlichen Höhen angeordnet. Jedes Stückgutfach 2 ist mit einer Verschlusseinrichtung 3 verschlossen, so dass unbefugte Personen keinen Zugriff auf die Stückgutfächer 2 und darin möglicherweise enthaltene Stückguter haben. Die Verschlusseinrichtungen 3 können aber aus den dargestellten Verschlussstellungen in Öffnungsstellungen verstellt werden, in denen die Verschlusseinrichtungen 3 den Zugriff auf die zugehörigen Stückgutfächer 2 und darin möglicherweise vorgesehenen Stückgüter freigeben. Um die Verschlusseinrichtungen 3 aus der Verschlussstellung in die Öffnungsstellung verstellen zu können, muss zunächst eine Verriegelungseinrichtung von einer Verriegelungsstellung, in der die Verriegelungseinrichtung die Verschlusseinrichtung 3 in der Verschlussstellung verriegelt, in eine Freigabestellung verstellt werden, in der die Verriegelungseinrichtung die Verschlusseinrichtung 3 zum Verstellen in die Öffnungsstellung freigibt.

Eine solche Verstellung der Verriegelungseinrichtung erfordert jedoch zunächst eine Authentifizierung eines Abholers, der zur Abholung eines Stückguts aus einem Stückgutfach 2 befugt ist. Der Abholer kann dann jedoch nach erfolgter Authentifizierung möglicherweise nur die Verriegelungseinrichtung für dieses Stückgutfach 2 entriegeln und so die zugehörige Verschlusseinrichtung dieses Stückgutfachs 2 in die Öffnungsstellung verstellen. Bedarfsweise ist zur Abholung eines weiteren Stückguts aus einem anderen Stückgutfach 2 desselben Stückgutschranks 1 eine weitere Authentifizierung erforderlich.

Bei dem dargestellten und insoweit bevorzugten Stückgutschrank 1 ist unter anderem zum Zwecke des Authentifizierens in der Mitte des Stückgutschranks 1 ein Bedienterminal 4 vorgesehen. Dieses Bedienterminal 4 könnte aber auch an einer anderen Stelle oder auf eine andere Art vorgesehen sein. Das Bedienterminal 4 erlaubt es mittels einer Authentifizierungseinrichtung 5 einem Abholer eines in einem der Stückgutfächer 2 vorgesehenen Stückguts, sich als zur Abholung dieses bestimmten Stückguts berechtigt zu authentifizieren. Zur Kommunikation zwischen dem Abholer und dem Stückgutschrank 1 ist ein Monitor 6 vorgesehen, der ein Touchdisplay aufweisen kann. Ansonsten oder zusätzlich kann auch ein Tastenfeld 7 vorgesehen sein, mit dem der Abholer erforderliche Eingaben vornehmen kann. Bei dem dargestellten Stückgutschrank 1 ist zu diesem Zweck ein Scanner 8 vorgesehen, der einen Barcode des Abholers scannt, welcher diesem zum Zwecke der Abholung des entsprechenden Stückguts übermittelt worden ist, und zwar beispielsweise auf ein mobiles Endgerät, etwa in Form eines Mobiltelefons.

Im Übrigen ist bei dem dargestellten und insoweit bevorzugten Stückgutschrank 1 noch ein Belegdrucker 9 vorgesehen, welcher dem Abholer einen Beleg über die Abholung ausdrucken kann. Alternativ oder zusätzlich kann aber auch vorgesehen sein, dass ein Stückgut zum Abholen in ein Stückgutfach 2 des Stückgutschranks 1 eingelegt wird. Alternativ oder zusätzlich kann auch zu diesem Zweck der Belegdrucker 9 einen Beleg drucken, insbesondere wenn das Einlegen von Stückgütern in Stückgutfächer 2 kostenpflichtig ist. Der Beleg kann beispielsweise dann dokumentieren, dass die entsprechende Zahlung geleistet worden ist. Grundsätzlich kann das Bedienterminal 4 auch anders vorgesehen und ausgestattet sein. Dies trägt dem Umstand Rechnung, dass Stückgutschränke 1 auf unterschiedliche Arten und von unterschiedlichen Personen bedient werden können.

Die Authentifizierungseinrichtung 5 ist mit einer Steuereinrichtung 10 gekoppelt, welche wiederum mit einer Verriegelungseinrichtung gekoppelt ist. Die Steuereinrichtung 10 steuert die Verriegelungseinrichtung, wenn die Authentifizierung des Abholers erfolgreich abgeschlossen ist. Dabei kann die Steuereinrichtung 10 auch den Authentifizierungsvorgang steuern. Die Verriegelungseinrichtung kann zwischen einer Verriegelungsstellung und einer Freigabestellung hin und her verstellt werden. In der Verriegelungsstellung verriegelt die Verriegelungseinrichtung eine Verschlusseinrichtung 3 in einer Verschlussstellung. In der Freigabestellung gibt die Verriegelungseinrichtung die Verschlusseinrichtung 3 zum Verstellen in die Öffnungsstellung frei. Die Verriegelungseinrichtung kann dabei selektiv jede einzelne Verschlusseinrichtung 3 des Stückgutschranks 1 entweder in der Verschlussstellung verriegeln oder zum Verstellen in die Öffnungsstellung freigeben. Die Verriegelungseinrichtung kann bedarfsweise auch mehrere Verschlusseinrichtungen 3 gleichzeitig zum Verstellen in die Öffnungsstellung freigeben. Die Verriegelungseinrichtung ist in der Fig. 1 nicht dargestellt.

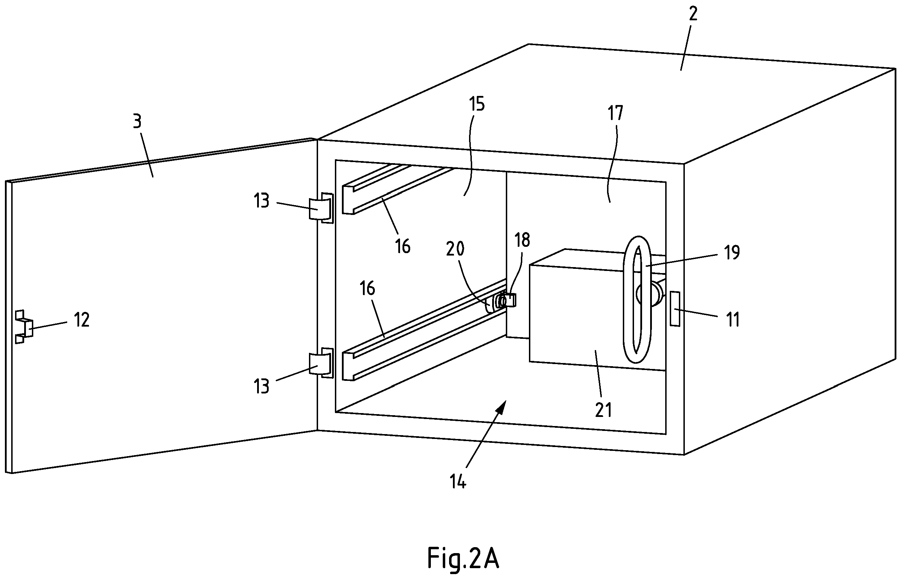

In den Fig. 2A-B ist ein Stückgutfach 2 des Stückgutschranks 1 in einer perspektivischen Ansicht und einer Schnittansicht von vorne dargestellt. Die Verschlusseinrichtung 3 befindet sich in der Öffnungsstellung. Die dargestellte und insoweit bevorzugte Verriegelungseinrichtung 11 befindet sich dennoch in der Verriegelungsstellung. Wenn die Verschlusseinrichtung 3 wieder in die Verschlussstellung verstellt wird, wird die Verriegelungseinrichtung 11 ausgelenkt und gelangt sodann in Eingriff mit einer Lasche 12 der Verschlusseinrichtung 3, die beim dargestellten und insoweit bevorzugten Stückgutschrank 1 in Form einer Tür ausgebildet ist. Zum Verstellen der Verschlusseinrichtung 3 in die Verschlussstellung wird die Verschlusseinrichtung 3 um die seitlich angebrachten Scharniere 13 in Richtung der Öffnung 14 des Stückgutfachs 2 geschwenkt, bis die Verschlusseinrichtung 3 die Öffnung 14 verschließt. Anstelle der Scharniere 13 könnte auch ein einziges Scharnier oder eine andere Schwenkeinheit vorgesehen sein.

An den Seitenwänden 15 des Stückgutfachs 2 sind jeweils zwei Führungsschienen 16 vorgesehen, entlang derer eine Rückwandeinheit 17 des Stückgutfachs 2 verstellt werden kann. Hierzu ist die Rückwandeinheit über Schlittenelemente 18 mit den Führungsschienen 16 und zudem mit einer Betätigungseinrichtung 19 verbunden. Die dargestellte und insoweit bevorzugte Betätigungseinrichtung 19 ist in Form eines eine Eingriffsöffnung aufweisenden Handgriffs ausgebildet. Die Schlittenelemente 18 der Rückwandeinheit 17 weisen Rollen 20 auf, die zusammen mit der Rückwandeinheit 17 entlang der Führungsschienen 16 verfahren werden können. Zwischen der in einer hinteren Nichtgebrauchsstellung angeordneten Rückwandeinheit 17 und der vorderen Öffnung 14 des Stückgutfachs 2 ist ein Stückgut 21 im Stückgutfach 2 angeordnet. Die Rückwandeinheit 17 verdeckt dabei in der Draufsicht von vorne wenigstens im Wesentlichen die gesamte Rückwand 22 des Stückgutfachs 2.

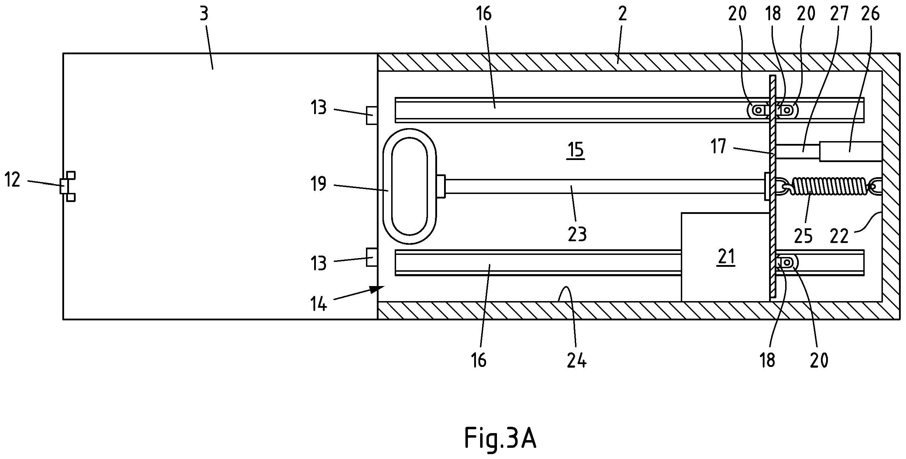

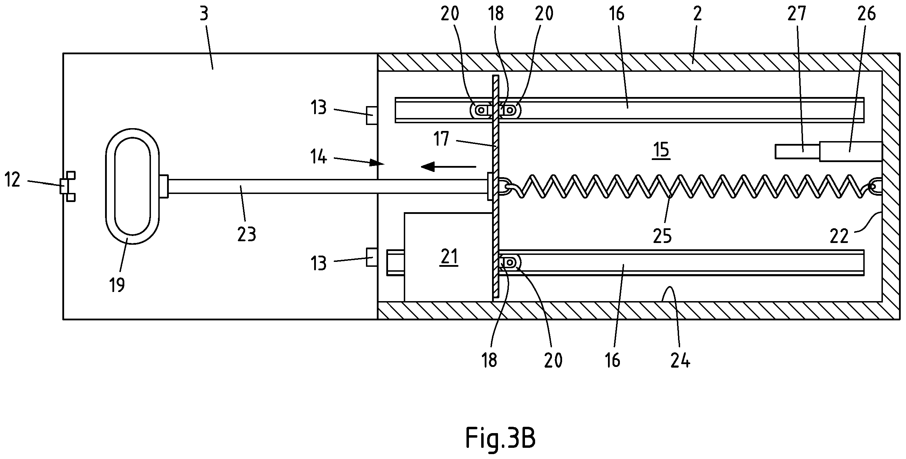

Wie dies insbesondere in den Fig. 3A-C dargestellt ist, ist die Betätigungseinrichtung 19 über eine Stange 23 mit der Rückwandeinheit 17 fest verbunden. Die Betätigungseinrichtung 19 könnte beispielsweise auch in der Nähe des Bodens 24 des Stückgutfachs 2 vorgesehen sein, was sich insbesondere bei hoch gelegenen Stückgutfächern 2 anbieten könnte, da die Betätigungseinrichtung 19 dann eventuell besser gegriffen werden kann. Die Rückwandeinheit 17 ist zudem mit Hilfe eines Federmittels 25 mit der Rückwand 22 des Stückgutfachs 2 verbunden. Wird die Betätigungseinrichtung 19 in der in der Fig. 3A dargestellten, hinteren Position von einem Abholer ergriffen und aus der Öffnung 14 des Stückgutfachs 2 herausgezogen, wird die Rückwandeinheit 17 von der hinteren Nichtgebrauchsstellung in die in der Fig. 3B dargestellte vordere Gebrauchsstellung verstellt.

Wo sich die vordere Gebrauchsstellung in Bezug auf das Stückgutfach 2 und/oder die Öffnung 14 des Stückgutfachs 2 genau befindet, ist abhängig davon, wie weit der Abholer die Betätigungseinrichtung 19 nach vorne zieht. Es wäre noch nicht einmal erforderlich, die Betätigungseinrichtung 19 aus der Öffnung 14 herauszuziehen. Bevorzugt ist dies aber schon. Die Rückwandeinheit 17 sollte so weit nach vorne verstellt werden, dass das Stückgut 21 infolgedessen so weit nach vorne verschoben wird, dass es vom Abholer leicht ergriffen werden kann, auch wenn das Stückgutfach 2 weit oben oder weit unten im Stückgutschrank 1 angeordnet ist.

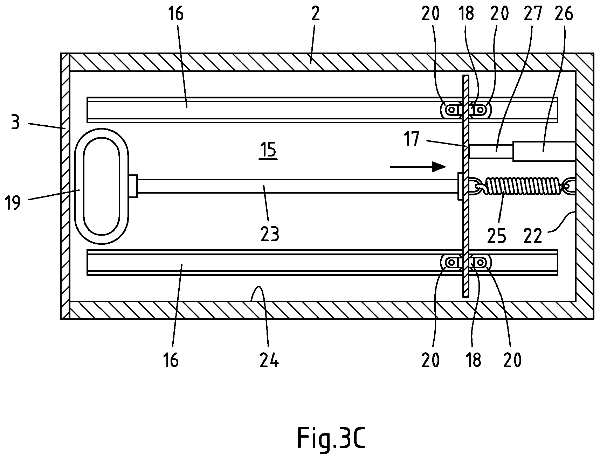

Vor dem eigentlichen Entnehmen des Stückguts 21 aus dem Stückgutfach 2 wird der Abholer die Betätigungseinrichtung 19 loslassen, woraufhin das ausgelenkte Federmittel 25 infolge der Rückstellkraft des Federmittels 25 die Rückwandeinheit 17 zurück in die in der Fig. 3C dargestellte, hintere Nichtgebrauchsstellung zieht. Im Bereich der hinteren Nichtgebrauchsstellung kann die Rückwandeinheit 17 in Anlage an einen Endanschlag 26 gelangen, der ein elastisches Dämpfungselement 27 aufweist. Ist die Rückwandeinheit 17 in der hinteren Nichtgebrauchsstellung angeordnet, ist die Betätigungseinrichtung 19 ebenfalls innerhalb des Stückgutfachs 2 angeordnet, so dass die Verschlusseinrichtung 3 in die Verschlussstellung verstellt und dort über die Verriegelungseinrichtung 11 verriegelt werden kann.

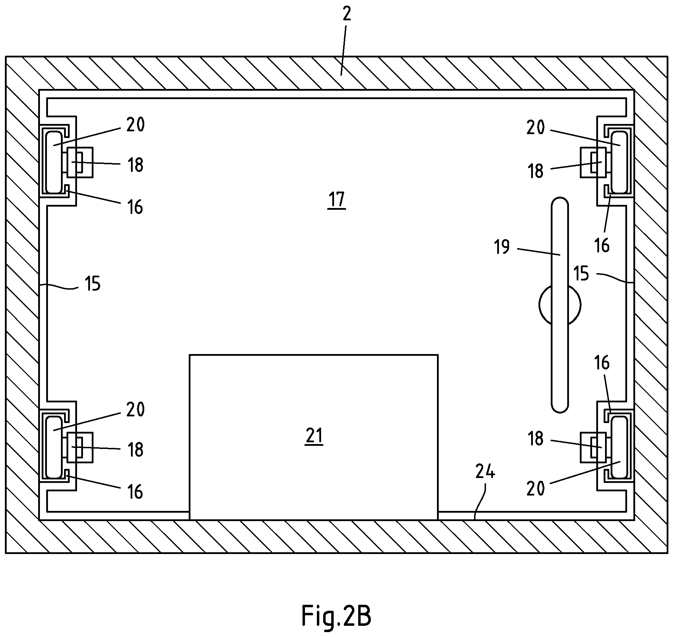

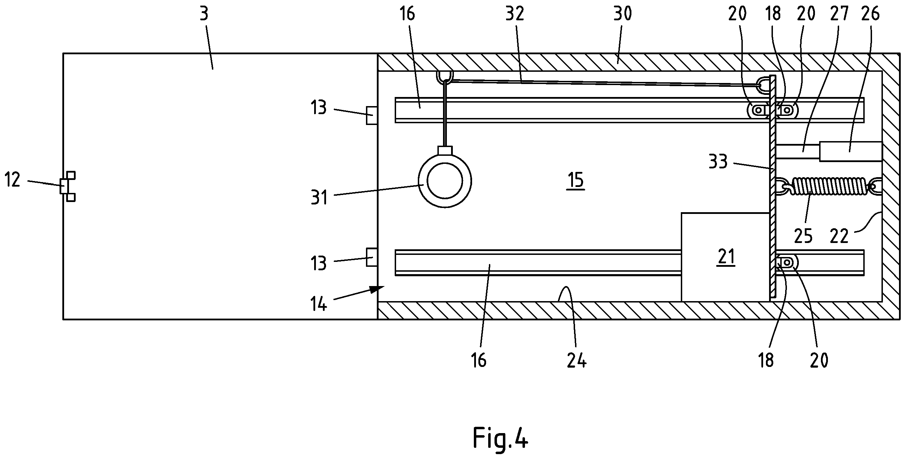

In der Fig. 4 ist ein alternatives Stückgutfach 30 in einer seitlichen Schnittansicht dargestellt. Dieses Stückgutfach 30 unterscheidet sich im Wesentlichen von dem in den Fig. 2 und 3 dargestellten Stückgutfach 2 in der Betätigungseinrichtung 31. Die Betätigungseinrichtung 31 der Fig. 4 weist einen Ring zum Ergreifen bzw. Eingreifen durch den Abholer auf, der über ein Seil 32, insbesondere ein Stahlseil, mit der Rückwandeinheit 33 verbunden ist. Wenn der Abholer die Betätigungseinrichtung 31 nach vorne also in Richtung der Öffnung 14 des Stückgutfachs 30 und darüber hinaus zieht, gelangt die Rückwandeinheit 33 zusammen mit dem Stückgut 21 im Stückgutfach 30 nach vorne, so dass das Stückgut 21 leicht aus dem Stückgutfach 30 entnommen werden kann. Die Funktion des Stückgutfachs 30 entspricht mithin prinzipiell der Funktion des Stückgutfachs 2 gemäß den Fig. 2 und 3 und bedarf daher keiner weiteren eingehenderen Erläuterung.

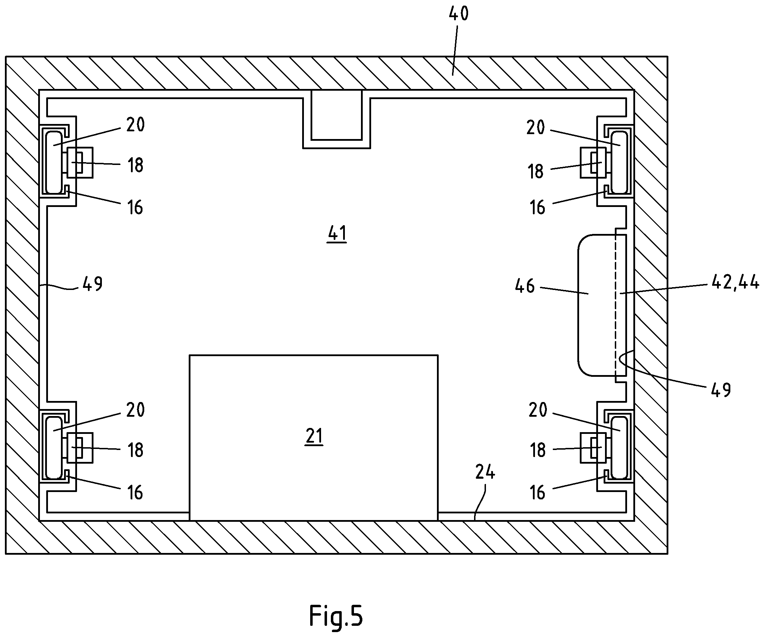

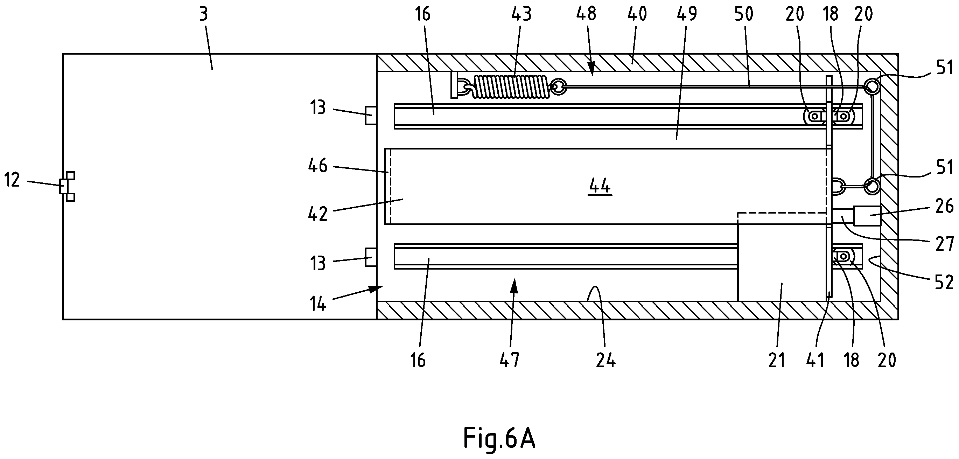

In der Fig. 5 ist noch ein anderes, alternatives Stückgutfach 40 in einer Schnittansicht von vorne dargestellt. Das Stückgutfach 40 ähnelt in seiner Funktion den beiden zuvor beschriebenen Stückgutfächern 2,30, wobei das Stückgutfach 40 an sich und die Rückwandeinheit 41 zwischen den beiden zuvor beschriebenen Stückgutfächern 2,30 und dem Stückgutfach 40 der Fig. 5 wenigstens vergleichbar sind. Der wesentliche Unterschied besteht in der Betätigungseinrichtung 42 einerseits und in der Anordnung des Federmittels 43 andererseits, wie dies in den Fig. 6A-B in einer seitlichen Schnittansicht dargestellt ist.

Die Rückwandeinheit 41 ist aus einem Blech gebildet, von dem eine Lasche 44 nach vorne abgekantet ist. Die Lasche 44 dient als die Betätigungseinrichtung 42, die am vorderen Ende erneut abgekantet ist und somit eine Art Griffleiste 46 bildet. Auf diese Weise wird der Aufnahmeraum 47 des Stückgutfachs 40 nur recht wenig eingeschränkt. Um das Stückgutfach 40 auch in seiner Tiefe möglichst umfangreich nutzen zu können, ist das Federmittel 43 zum Zurückverstellen der Rückwandeinheit 41 aus einer vorderen Gebrauchsstellung in die in der Fig. 6A dargestellte hintere Nichtgebrauchsstellung wenigstens teilweise zwischen der Rückwandeinheit 41 und der Öffnung 14 des Stückgutfachs 40 vorgesehen.

Bei dem dargestellten und insoweit bevorzugten Stückgutfach 40 ist das Federmittel 43 im Deckenbereich 48 des Stückgutfachs 40 angeordnet, wo es in den meisten Fällen kaum stören wird. Das Federmittel 43 könnte aber auch an einer Seitenwand 49 oder am Boden 24 vorgesehen sein. Das Federmittel 43 ist über ein Seil 50, insbesondere Drahtseil, und über Umlenkösen 51 mit der Rückseite der Rückwandeinheit 41 verbunden. Anstelle der Umlenkösen 51 könnten auch Umlenkungsrollen vorgesehen sein, um ein noch leichteres Verstellen der Rückwandeinheit 41 zu erreichen. Durch die Anordnung des Federmittels 43 wenigstens teilweise vor der Rückwandeinheit 41, die sich in der hinteren Nichtgebrauchsstellung befindet, kann die Rückwandeinheit 41 in der Nichtgebrauchsstellung näher an der Rückwand 52 des Stückgutfachs 40 angeordnet werden, als bei den beiden zuvor beschriebenen Stückgutfächern 2,30.

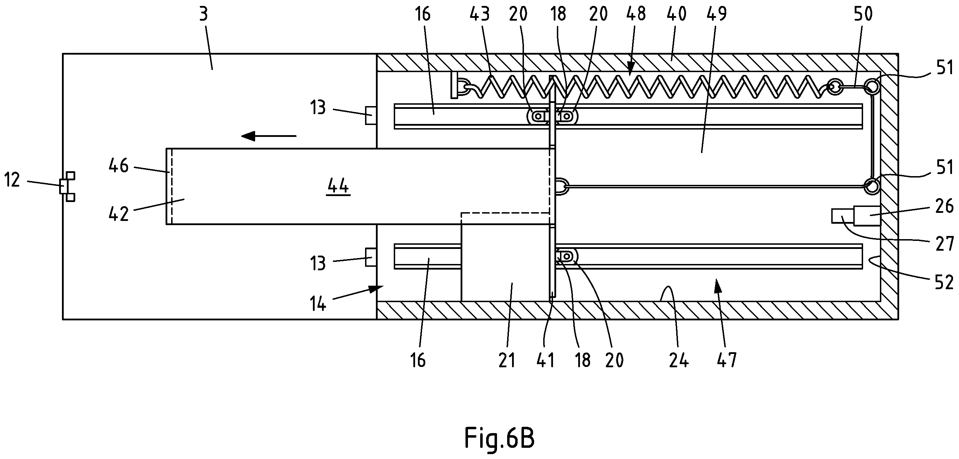

Wenn die Betätigungseinrichtung 42 ergriffen und nach vorne, teilweise aus der Öffnung 14 des Stückgutfachs 40 herausgezogen wird, gelangt die Rückwandeinheit 41 in eine vordere Gebrauchsstellung, wie dies in der Fig. 6B dargestellt ist. Zusammen mit der Rückwandeinheit 41 wird das Stückgut 21 von der Rückwandeinheit 41 aus einer hinteren Stellung in eine vordere Stellung nahe an der Öffnung 14 des Stückgutfachs 40 verschoben, wo das Stückgut 21 leicht aus dem Stückgutfach 40 entnommen werden kann. Das Federmittel 43 längt sich dabei nach hinten in Richtung der Rückwand 52 des Stückgutfachs 40. Die Rückwandeinheit 41 weist am oberen Rand eine Aussparung 53 auf, um die Rückwandeinheit 41 trotz des im Deckenbereich 48 angeordneten Federmittels 43 ganz nach vorne verschieben zu können.

### Bezugszeichenliste

- 1: Stückgutschrank
- 2: Stückgutfach
- 3: Verschlusseinrichtung
- 4: Bedienterminal
- 5: Authentifizierungseinrichtung
- 6: Monitor
- 7: Tastenfeld
- 8: Scanner
- 9: Belegdrucker
- 10: Steuereinrichtung
- 11: Verriegelungseinrichtung
- 12: Lasche
- 13: Scharnier
- 14: Öffnung
- 15: Seitenwand
- 16: Führungsschiene
- 17: Rückwandeinheit
- 18: Schlittenelement
- 19: Betätigungseinrichtung
- 20: Rollen
- 21: Stückgut
- 22: Rückwand
- 23: Stange
- 24: Boden
- 25: Federmittel
- 26: Endanschlag
- 27: Dämpfungselement
- 30: Stückgutfach
- 31: Betätigungseinrichtung
- 32: Seil
- 33: Rückwandeinheit
- 40: Stückgutfach
- 41: Rückwandeinheit
- 42: Betätigungseinrichtung
- 43: Federmittel
- 44: Lasche
- 46: Griffleiste
- 47: Aufnahmeraum
- 48: Deckenbereich
- 49: Seitenwand
- 50: Seil
- 51: Umlenkösen
- 52: Rückwand

## Patentansprüche

1. Stückgutschrank (1) zum Bereithalten von abzuholenden Stückgütern (21) mit einer Mehrzahl von separaten Stückgutfächern (2,30,40) zum Einlegen und Entnehmen von Stückgütern (21), mit einer Steuereinrichtung (10) zur Steuerung des Einlegens und Entnehmens von Stückgütern (21) in oder aus den Stückgutfächern (2) und mit einer Authentifizierungseinrichtung (5) zur Authentifizierung eines Abholers des Stückguts (21), wobei den Stückgutfächern (2,30,40) jeweils eine von einer Zugriff auf das zugehörige Stückgutfach (2,30,40) verhindernden Verschlussstellung in eine Zugriff auf das zughörige Stückgutfach (2,30,40) freigebende Öffnungsstellung verstellbare Verschlusseinrichtung (3) zugeordnet ist, wobei die Steuereinrichtung (10) mit wenigstens einer von einer eine Verschlusseinrichtung (3) in der Verschlussstellung verriegelnden Verriegelungsstellung in eine das Verstellen der Verschlusseinrichtung (3) in die Öffnungsstellung freigebende Freigabestellung verstellbaren Verriegelungseinrichtung (11) gekoppelt ist und wobei die Authentifizierungseinrichtung (5) zur Aktivierung der Steuereinrichtung (10) bei erfolgreicher Authentifizierung des Abholers mit der Steuereinrichtung (10) gekoppelt ist,
**dadurch gekennzeichnet, dass** wenigstens einige der Stückgutfächer (2,30,40) eine innerhalb des zugehörigen Stückgutfachs (2,30,40) von einer hinteren Nichtgebrauchsstellung in wenigstens eine vordere Gebrauchsstellung verstellbare Rückwandeinheit (17,33,41) zum Verschieben eines in dem zugehörigen Stückgutfach (2,30,40) enthaltenen Stückgut (21) nach vorne in Richtung einer Öffnung (14) des Stückgutfachs (2,30,40) aufweisen.

2. Stückgutschrank nach Anspruch 1,
**dadurch gekennzeichnet, dass** die Rückwandeinheit (17,33,41) über ein Federmittel (25,43) mit dem Stückgutfach (2,30,40) derart gekoppelt ist, dass sich die Rückwandeinheit (17,33,41) im ansonsten unbelasteten Zustand aus der wenigstens einen vorderen Gebrauchsstellung selbsttätig wieder in die hintere Nichtgebrauchsstellung zurück verstellt.

3. Stückgutschrank nach Anspruch 1 oder 2,
**dadurch gekennzeichnet, dass** die Rückwandeinheit (17,33,41) mit einer vom Abholer zu ergreifenden Betätigungseinrichtung (19,31,42) derart verbunden ist, so dass die Rückwandeinheit (17,33,41) über die Betätigungseinrichtung (19,31,42) von der hinteren Nichtgebrauchsstellung in die wenigstens eine vordere Gebrauchsstellung verstellbar ist.

4. Stückgutschrank nach einem der Ansprüche 1 bis 3,
**dadurch gekennzeichnet, dass** die Betätigungseinrichtung (19,31,42) einen Griff, eine Griffleiste, einen Knauf oder einen Ring zum Ergreifen durch den Abholer aufweist und/oder dass die Betätigungseinrichtung (19,31,42) starr, vorzugsweise über einen Stab oder eine Leiste, oder flexibel, vorzugsweise durch eine lediglich auf Zug belastbare Verbindung, insbesondere umfassend ein Seil (32,50) oder einen Draht, mit der Rückwandeinheit (17,33,41) verbunden ist.

5. Stückgutschrank nach einem der Ansprüche 1 bis 4,
**dadurch gekennzeichnet, dass** das Stückgutfach (2,30,40) mehrere Führungsschienen (16), insbesondere an den einander gegenüberliegenden Seitenwänden (15,49) des Stückgutfachs (2,30,40), aufweist und dass, vorzugsweise, die Rückwandeinheit (17,33,41) über wenigstens ein Schlittenelement (18) entlang der Führungsschienen (16) verstellbar mit den Führungsschienen (16) verbunden ist.

6. Stückgutschrank nach einem der Ansprüche 1 bis 5,
**dadurch gekennzeichnet, dass** die Rückwandeinheit (17,33,41) in der Nichtgebrauchsstellung, insbesondere zusammen mit der Betätigungseinrichtung (19,31,42) vollständig innerhalb des Stückgutfachs (2,30,40) aufgenommen ist.

7. Stückgutschrank nach einem der Ansprüche 1 bis 6,
**dadurch gekennzeichnet, dass** obere und/oder untere Stückgutfächer (2,30,40) eine Rückwandeinheit (17,33,41) aufweisen und dass, vorzugsweise, lediglich obere und/oder untere Stückgutfächer (2,30,40) eine Rückwandeinheit (17,33,41) aufweisen.

8. Stückgutschrank nach einem der Ansprüche 1 bis 7,
**dadurch gekennzeichnet, dass** höhere Stückgutfächer (2,30,40) und niedrigere Stückgutfächer (2,30,40) vorgesehen sind und dass, vorzugsweise lediglich, niedrigere Stückgutfächer (2,30,40) eine Rückwandeinheit (17,33,41) aufweisen.

9. Verfahren zum Abholen wenigstens eines Stückguts (21) aus einem Stückgutschrank (1) nach einem der Ansprüche 1 bis 8,
- bei dem sich ein Abholer an einer Authentifizierungseinrichtung (5) als zum Abholen eines Stückguts (21) aus einem Stückgutfach (2) des Stückgutschranks (1) berechtigt authentifiziert,
- bei dem die Steuereinrichtung (10) nach erfolgter Authentifizierung eine Verriegelungseinrichtung (11) von einer eine Verschlusseinrichtung (3) in einer Verschlussstellung verriegelnden Verriegelungsstellung in eine die Verschlusseinrichtung (3) in eine Öffnungsstellung freigebende Freigabestellung verstellt,
- bei dem nach dem Verstellen der Verschlusseinrichtung (3) in die Öffnungsstellung vom Abholer eine Betätigungseinrichtung (19,31,42) des Stückgutsfachs (1) ergriffen wird,
- bei dem der Abholer mittels der Betätigungseinrichtung (19,31,42) eine Rückwandeinheit (17,33,41) des Stückgutfachs (2,30,40) von einer hinteren Nichtgebrauchsstellung in wenigstens eine vordere Gebrauchsstellung verstellt und dabei das Stückgut (21) wenigstens abschnittsweise zusammen mit der Rückwandeinheit (17,33,41) in dem Stückgutfach (2,30,40) nach vorne in eine vordere Position verschiebt und
- bei dem das Stückgut (21) von dem Abholer händisch aus der vorderen Position aus dem Stückgutfach (2,30,40) entnommen wird.

10. Verfahren nach Anspruch 9,
- bei dem sich die Rückwandeinheit (17,33,41) nach dem Loslassen der Betätigungseinrichtung (19,31,42) durch den Abholer über ein Federmittel (25,43) selbsttätig aus der wenigstens einen vorderen Gebrauchsstellung in die hintere Nichtgebrauchsstellung zurück verstellt.

11. Verfahren nach Anspruch 9 oder 10,
- bei dem die Rückwandeinheit (17,33,41) und die Betätigungseinrichtung (19,31,42) in der hinteren Nichtgebrauchsstellung vollständig in dem Stückgutfach aufgenommen werden.

12. Verfahren nach einem der Ansprüche 9 bis 11,
- bei dem die Rückwandeinheit (17,33,41) über wenigstens ein Schlittenelement (18) entlang von Führungsschienen (16) des Stückgutfachs (2,30,40) von der hinteren Nichtgebrauchsstellung in eine vordere Gebrauchsstellung und zurück verstellt wird.

13. Verfahren nach einem der Ansprüche 9 bis 12,
- bei dem sich ein Abholer an einer Authentifizierungseinrichtung (5) als zum Abholen mehrerer Stückgüter (21) aus mehreren Stückgutfächern (2,30,40) des Stückgutschranks (1) berechtigt authentifiziert,
- bei dem die Steuereinrichtung (10) nach erfolgter Authentifizierung wenigstens eine Verriegelungseinrichtung (11) von einer mehrere Verschlusseinrichtungen (3) in einer Verschlussstellung verriegelnden Verriegelungsstellung in eine die Verschlusseinrichtung (3) in eine Öffnungsstellung freigebende Freigabestellung verstellt,
- bei dem nach dem Verstellen der Verschlusseinrichtungen (3) in die Öffnungsstellung vom Abholer nacheinander mehrere Betätigungseinrichtungen (19,31,42) mehrerer Stückgutfächer (2,30,40) ergriffen werden,
- bei dem der Abholer mittels der Betätigungseinrichtungen (19,31,42) Rückwandeinheiten (17,33,41) der Stückgutfächer (2,30,40) von hinteren Nichtgebrauchsstellungen in vordere Gebrauchsstellungen verstellt und dabei die Stückgüter (21) wenigstens abschnittsweise zusammen mit den Rückwandeinheiten (17,33,41) in den Stückgutfächern (2,30,40) nach vorne in eine vordere Position verschoben werden und
- bei dem die Stückgüter (21) von dem Abholer händisch aus den vorderen Positionen aus den Stückgutfächern (2,30,40) entnommen werden.
